# EUROPEAN PATENT APPLICATION

(11) **EP 4 571 192 A1**
(43) Date of publication of application: **18.06.2025**
(21) Application number: 24212347.9
(22) Date of filing: 12.11.2024
(51) Int. Cl.: F23R 3/28, F02C 7/22

(54) **FUEL SPRAY NOZZLE FOR A GAS TURBINE ENGINE**

(30) Priority: 12.12.2023 GB 202318903
(71) Applicant: Rolls-Royce plc, London N1 9FX (GB)
(72) Inventor: Glover, Mark, Derby, DE24 8BJ (GB)
(74) Representative: Rolls-Royce plc

(57) **Abstract**

A fuel spray nozzle (100, 200) for a gas turbine engine (10) includes a feed arm (102), a fuel tube (106), a sleeve (112), and a nozzle head (114). The feed arm (102) includes a housing (104). The fuel tube (106) is disposed within the housing (104) and spaced apart from the housing (104), such that the housing (104) and the fuel tube (106) define an air gap (108) therebetween. The sleeve (112) is disposed within the air gap (108) and spaced apart from the housing (104). The sleeve (112) at least partially engages with the fuel tube (106) and surrounds at least a portion of the fuel tube (106) along a tube axis (110). The sleeve (112) is movably disposed around the fuel tube (106), such that the sleeve (112) and the fuel tube (106) are movable relative to each other along the tube axis (110). The nozzle head (114) is fluidly connected to the fuel tube (106) and configured to receive the fuel from the fuel tube (106).

## Description

### Field

The present disclosure relates to a fuel spray nozzle for a gas turbine engine.

### Background

Fuel spray nozzles (FSNs) of a gas turbine engine operate in harsh thermal environments, with operating temperatures often exceeding temperatures at which aviation fuel degrades. In order to thermally protect the fuel from hot structural components of the gas turbine engine, FSNs are often provided with an insulating air gap between cold fuel-carrying components, such as a fuel tube, of the FSNs and the hot components, such as a feed arm.

Further, as the hot structural components and the cold components undergo different thermal expansion, slip fits between the hot components and cold components are commonly used to reduce thermally induced stress in the components to an acceptable level. However, these slip fits may allow the fuel to enter the insulating air gap during various parts of flight and during a shutdown cycle of the gas turbine engine. Once the fuel enters the insulating air gap, the fuel may degrade and form carbon deposits.

Over time, the carbon deposits may become densely packed and mechanically damage the FSNs by preventing differential thermal movement between the hot components and the cold components. In some cases, the damage to the fuel tube may cause the fuel to leak from the fuel tube outside the combustion chamber, which may potentially cause a fire.

### Summary

According to a first aspect there is provided a fuel spray nozzle for a gas turbine engine. The fuel spray nozzle includes a feed arm including a housing. The fuel spray nozzle further includes a fuel tube disposed within the housing. The fuel tube is configured to receive a fuel. The fuel tube is spaced apart from the housing, such that the housing and the fuel tube define an air gap therebetween. The fuel tube extends along a tube axis. The fuel spray nozzle further includes a sleeve at least partially engaging with the fuel tube and surrounding at least a portion of the fuel tube along the tube axis. The sleeve is disposed within the air gap and spaced apart from the housing. The sleeve is movably disposed around the fuel tube, such that the sleeve and the fuel tube are movable relative to each other along the tube axis. The fuel spray nozzle further includes a nozzle head fluidly connected to the fuel tube and configured to receive the fuel from the fuel tube. The nozzle head is further configured to receive air and discharge an air-fuel mixture into a combustion chamber of the gas turbine engine.

The fuel spray nozzle of the present disclosure may allow differential thermal expansion between the fuel tube and the housing of the feed arm in presence of carbon deposits within the housing. Specifically, the sleeve may prevent formation of the carbon on the fuel tube, thereby allowing differential thermal expansion between the fuel tube and the housing.

More specifically, the carbon deposits may form on an outer surface of the sleeve instead of the fuel tube. Since the sleeve and the fuel tube are movable relative to each other along the tube axis, even if the sleeve gets jammed due to the carbon deposits, the fuel tube may still be able to move relative to the housing to accommodate thermal growth of the housing. Therefore, the sleeve may prevent damage to the fuel tube, which may otherwise occur if the carbon deposits restrict relative movement of the fuel tube and the housing.

In some embodiments, the fuel tube includes an outer tube surface defining an outer tube diameter. The sleeve at least partially engages the outer tube surface of the fuel tube. The sleeve includes an inner sleeve surface defining an inner sleeve diameter. The inner sleeve surface surrounds the outer tube surface of the fuel tube. The inner sleeve diameter is greater than the outer tube diameter by 0.1 millimetres to 0.5 millimetres.

The aforementioned dimensions of the fuel tube and the sleeve may allow the sleeve and the fuel tube to move relative to each other. Specifically, the sleeve may form a clearance fit with the fuel tube.

In some embodiments, the sleeve further includes an outer sleeve surface opposite to the inner sleeve surface and facing the air gap. The sleeve further includes a thickness defined between the inner sleeve surface and the outer sleeve surface. The thickness is from 0.5 millimetres to 1.5 millimetres.

The aforementioned thickness of the sleeve may provide the sleeve with desirable resilience to mechanical failure. Consequently, the sleeve may be suitable for use for a prolonged time period, and may not require regular replacement.

In some embodiments, the sleeve further includes at least one recess extending from the inner sleeve surface towards the outer sleeve surface. The fuel spray nozzle further includes a sealing member at least partially disposed within the at least one recess. The sealing member engages with the fuel tube.

Advantageously, the sealing member forms a seal between the fuel tube and the sleeve. Consequently, the sealing member may prevent ingress of the carbon deposits and formation of the carbon deposits on the fuel tube. Specifically, the sealing member may prevent ingress of any fuel (liquid or vapour) between the sleeve and the fuel tube.

In some embodiments, the sealing member may include an O-ring.

In some embodiments, the sealing member includes a fluoroelastomer polymer. For example, the sealing member may include a VITON^{™} fluoroelastomer polymer.

In some embodiments, the sleeve includes a pair of ends spaced apart from each other with respect to the tube axis. The sleeve further includes a pair of lips disposed at the pair of ends and engaging with the fuel tube. Each of the pair of lips is configured to scrape the fuel tube. Advantageously, each of the pair of lips may function as a scraper and prevent formation of the carbon deposits on the fuel tube.

In some embodiments, the fuel spray nozzle further includes at least one biasing member connected to the sleeve and engaging with the fuel tube. The at least one biasing member is configured to maintain the sleeve at a predefined position with respect to the fuel tube.

The at least one biasing member may ensure that the sleeve remains disposed in a correct axial position relative to the fuel tube. Specifically, the at least one biasing member may prevent the sleeve from moving independently of the fuel tube during operation of the gas turbine engine (e.g., due to vibration).

In some embodiments, the sleeve has a melting temperature of greater than 160 °C. This may ensure that the sleeve does not fail due to high temperatures.

According to a second aspect there is provided a gas turbine engine. The gas turbine engine includes the fuel spray nozzle of the first aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**FIG. 1** is a sectional side view of a gas turbine engine;
**FIG. 2** is a schematic cross-sectional side view of a fuel spray nozzle in accordance with an embodiment of the present disclosure;
**FIG. 3** is a detailed cross-sectional view of a portion of the fuel spray nozzle of FIG. 2; and
**FIG. 4** is a detailed cross-sectional view of a portion of a fuel spray nozzle in accordance with another embodiment of the present disclosure.

### Detailed description

Aspects and embodiments of the present disclosure will now be discussed with reference to the accompanying figures. Further aspects and embodiments will be apparent to those skilled in the art.

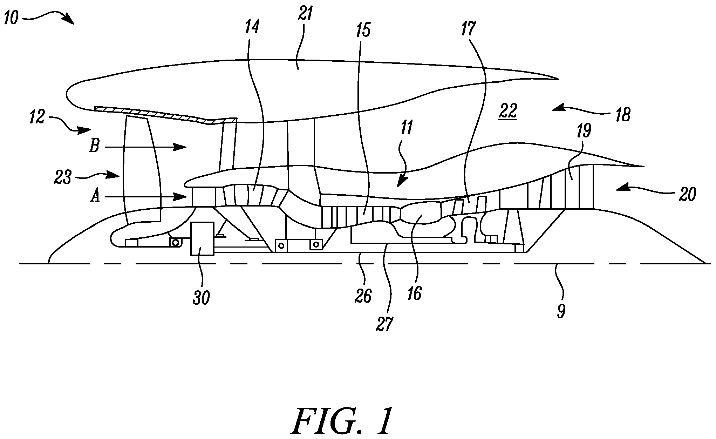

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage. The combustion equipment 16 typically includes a fuel spray nozzle and a combustion chamber.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

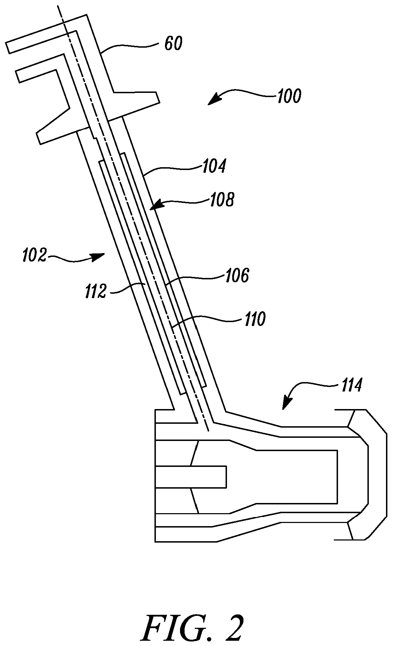

**FIG. 2** shows a schematic cross-sectional view of a fuel spray nozzle 100 for a gas turbine (e.g., the gas turbine engine 10 of FIG. 1) in accordance with an embodiment of the present disclosure.

The fuel spray nozzle 100 includes a feed arm 102. The feed arm 102 includes a housing 104. The fuel spray nozzle 100 further includes a fuel tube 106 disposed within the housing 104. The housing 104 may surround the fuel tube 106. Further, the fuel tube 106 extends along a tube axis 110 (shown by a dashed line).

The fuel tube 106 is spaced apart from the housing 104, such that the housing 104 and the fuel tube 106 define an air gap 108 therebetween. In other words, the fuel tube 106 is disposed within the housing 104, such that the air gap 108 is formed between the fuel tube 106 and the housing 104.

The fuel tube 106 is configured to receive a fuel. The feed arm 102 may further include a connector 60. The connector 60 may fluidly couple the fuel tube 106 to a fuel distribution system (not shown) of the gas turbine engine, such that the fuel tube 106 receives the fuel from the fuel distribution system.

The fuel spray nozzle 100 further includes a nozzle head 114. The nozzle head 114 is fluidly connected to the fuel tube 106 and configured to receive the fuel from the fuel tube 106. Specifically, the fuel tube 106 may receive the fuel from the fuel distribution system and provide the nozzle head 114 with the fuel.

The nozzle head 114 is further configured to receive air and discharge an air-fuel mixture into a combustion chamber of the gas turbine engine. Combustion equipment of the gas turbine engine may include the combustion chamber. Referring to FIG. 1, for example, the combustion equipment 16 of the gas turbine engine 10 may include a combustion chamber, and the nozzle head 114 may discharge the air-fuel mixture into the combustion chamber of the combustion equipment 16. Specifically, the nozzle head 114 may mix the fuel with air received from the low-pressure and high-pressure compressors 14, 15, and deliver the air-fuel mixture into the combustion chamber of the combustion equipment 16.

The fuel spray nozzle 100 further includes a sleeve 112 at least partially engaging with the fuel tube 106 and surrounding at least a portion of the fuel tube 106 along the tube axis 110. In other words, the sleeve 112 may extend circumferentially and axially along a portion of the fuel tube 106. The sleeve 112 is disposed within the air gap 108 and spaced apart from the housing 104. The sleeve 112 does not engage with the housing 104. Further, the sleeve 112 is movably disposed around the fuel tube 106, such that the sleeve 112 and the fuel tube 106 are movable relative to each other along the tube axis 110.

The fuel spray nozzle 100 may allow differential thermal expansion between the fuel tube 106 and the housing 104 of the feed arm 102 in presence of carbon deposits within the housing 104. Specifically, the sleeve 112 may prevent formation of the carbon on the fuel tube 106, thereby allowing differential thermal expansion between the fuel tube 106 and the housing 104.

More specifically, the carbon deposits may form on an outer surface of the sleeve 112 instead of the fuel tube 106. Since the sleeve 112 and the fuel tube 106 are movable relative to each other along the tube axis 110, even if the sleeve 112 gets jammed due to the carbon deposits, the fuel tube 106 may still be able to move relative to the housing 104 to accommodate thermal growth of the housing 104. Therefore, the sleeve 112 may prevent damage to the fuel tube 106, which may otherwise occur if the carbon deposits restrict relative movement of the fuel tube 106 and the housing 104.

Moreover, the sleeve 112 may not require additional space or special processing to incorporate. Additionally, the sleeve 112 may not be highly stressed during use. Therefore, the sleeve 112 may not fail in service or cause wear on the fuel tube 106.

The sleeve 112 may be made from any suitable material having a high melting temperature. Preferably, the sleeve 112 may be made from a metal, such as, for example, stainless steel type 347 and Nickel Chromium Aluminium Yttrium (NiCrAlY). In some embodiments, the sleeve 112 has a melting temperature of greater than 160 °C. This may ensure that the sleeve 112 does not fail due to high temperatures.

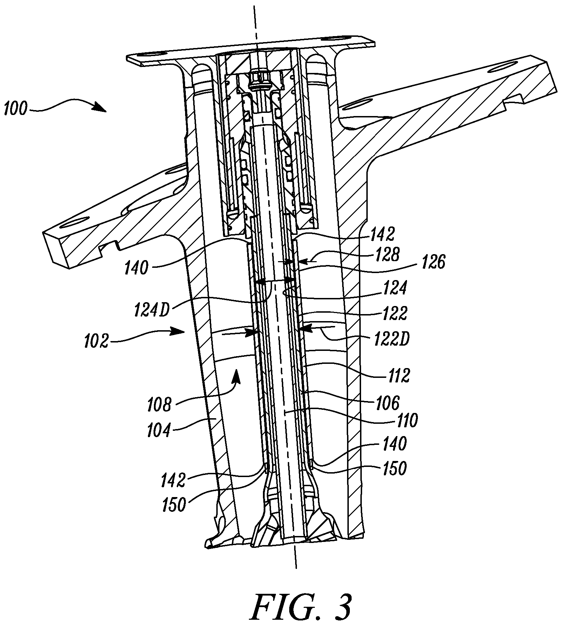

**FIG. 3** shows a detailed cross-sectional view of a portion of the fuel spray nozzle 100 of FIG. 2.

Referring to FIG. 3, the fuel tube 106 includes an outer tube surface 122 defining an outer tube diameter 122D. The sleeve 112 may at least partially engage the outer tube surface 122 of the fuel tube 106. Further, the sleeve 112 includes an inner sleeve surface 124 defining an inner sleeve diameter 124D. The inner sleeve surface 124 may surround the outer tube surface 122 of the fuel tube 106. In some embodiments, the inner sleeve diameter 124D is greater than the outer tube diameter 122D by 0.1 millimetres to 0.5 millimetres. Preferably, the inner sleeve diameter 124D may be greater than the outer tube diameter 122D by 0.5 millimetres.

The sleeve 112 further includes an outer sleeve surface 126 opposite to the inner sleeve surface 124 and facing the air gap 108. The sleeve 112 further includes a thickness 128 defined between the inner sleeve surface 124 and the outer sleeve surface 126. In some embodiments, the thickness 128 is from 0.5 millimetres to 1.5 millimetres. Preferably, the thickness 128 may be from 0.8 millimetres to 1 millimetre.

In some embodiments, the sleeve 112 further includes a pair of ends 140 spaced apart from each other with respect to the tube axis 110. In some embodiments, the sleeve 112 further includes a pair of lips 142 disposed at the pair of ends 140 and engaging with the fuel tube 106. Each of the pair of lips 142 is configured to scrape the fuel tube 106. That is, each of the pair of lips 142 may function as a scraper and prevent formation of the carbon deposits on the fuel tube 106.

In some embodiments, the fuel spray nozzle 100 further includes at least one biasing member 150 (schematically depicted by blocks in FIG. 3) connected to the sleeve 112 and engaging with the fuel tube 106. The at least one biasing member 150 may be configured to maintain the sleeve 112 in a predefined position with respect to the fuel tube 106. In some embodiments, the at least one biasing member 150 may include a plurality of biasing members 150, as per application requirements.

The at least one biasing member 150 may ensure that the sleeve 112 remains disposed in a correct axial position relative to the fuel tube 106. The at least one biasing member 150 may prevent the sleeve 112 from moving independently of the fuel tube 106 during operation of the gas turbine engine (e.g., due to vibration). In some examples, the at least one biasing member 150 may function as a centring device that centre the sleeve 112 on the fuel tube 106. Examples of the at least one biasing member 150 include elastic bodies, such as springs.

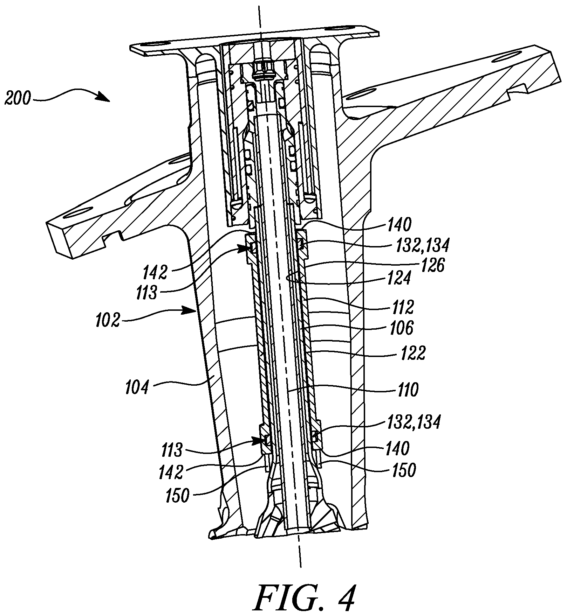

**FIG. 4** is a detailed cross-sectional view of a fuel spray nozzle 200 in accordance with another embodiment of the present disclosure. The fuel spray nozzle 200 is similar to the fuel spray nozzle 100 of FIG. 3, with like elements designated by like reference characters. However, the fuel spray nozzle 200 has a different configuration of the sleeve 112 than that of the fuel spray nozzle 100.

Specifically, in the illustrated embodiment of FIG. 4, the sleeve 112 further includes at least one recess 113 extending from the inner sleeve surface 124 towards the outer sleeve surface 126. Moreover, the fuel spray nozzle 200 further includes a sealing member 132 at least partially disposed within the at least one recess 113. The sealing member 132 engages with the fuel tube 106. More specifically, the sealing member 132 may engage with the outer tube surface 122 of the fuel tube 106.

The sealing member 132 may form a seal between the fuel tube 106 and the sleeve 112. Consequently, the sealing member 132 may prevent ingress of the carbon deposits and formation of the carbon deposits on the fuel tube 106. Specifically, the sealing member 132 may prevent ingress of any fuel (liquid or vapour) between the sleeve 112 and the fuel tube 106.

The sealing member 132 may be formed of any resiliently deformable material that is able to form a tight seal between the fuel tube 106 and the sleeve 112. In some embodiments, the sealing member 132 includes an O-ring 134. Further, in some embodiments, the sealing member 132 includes a fluoroelastomer polymer. For example, the sealing member 132 may include a VITON^{™} fluoroelastomer polymer.

In the illustrated embodiment of FIG. 4, the sleeve 112 includes a pair of recess 113 disposed proximal to the respective ends 140 of the sleeve 112. Further, the fuel spray nozzle 200 includes a pair of sealing members 132. Each of the pair of sealing members 132 is at least partially disposed within a corresponding recess 113 from the pair of recesses 113.

In some embodiments, the gas turbine engine 10 (shown in FIG. 1) includes the fuel spray nozzle 100, 200. More specifically, in some embodiments, the combustion equipment 16 of the gas turbine engine 10 includes the fuel spray nozzle 100, 200. Further, while the fuel spray nozzle 100, 200 shown is a lean burn fuel spray nozzle, the disclosure is equally applicable to a rich burn fuel spray nozzle.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fuel spray nozzle (100, 200) for a gas turbine engine (10), the fuel spray nozzle (100, 200) comprising:
a feed arm (102) comprising a housing (104);
a fuel tube (106) disposed within the housing (104), the fuel tube (106) configured to receive a fuel, wherein the fuel tube (106) is spaced apart from the housing (104), such that the housing (104) and the fuel tube (106) define an air gap (108) therebetween, and wherein the fuel tube (106) extends along a tube axis (110);
a sleeve (112) at least partially engaging with the fuel tube (106) and surrounding at least a portion of the fuel tube (106) along the tube axis (110), wherein the sleeve (112) is disposed within the air gap (108) and spaced apart from the housing (104), and wherein the sleeve (112) is movably disposed around the fuel tube (106), such that the sleeve (112) and the fuel tube (106) are movable relative to each other along the tube axis (110); and
a nozzle head (114) fluidly connected to the fuel tube (106) and configured to receive the fuel from the fuel tube (106), wherein the nozzle head (114) is further configured receive air and discharge an air-fuel mixture into a combustion chamber of the gas turbine engine (10).

2. The fuel spray nozzle (100, 200) of claim 1, wherein the fuel tube (106) comprises an outer tube surface (122) defining an outer tube diameter (122D), wherein the sleeve (112) at least partially engages the outer tube surface (122) of the fuel tube (106) and comprises an inner sleeve surface (124) defining an inner sleeve diameter (124D), wherein the inner sleeve surface (124) surrounds the outer tube surface (122) of the fuel tube (106), and wherein the inner sleeve diameter (124D) is greater than the outer tube diameter (122D) by 0.1 millimetres to 0.5 millimetres.

3. The fuel spray nozzle (100, 200) of claim 2, wherein the sleeve (112) further comprises an outer sleeve surface (126) opposite to the inner sleeve surface (124) and facing the air gap (108), and a thickness (128) defined between the inner sleeve surface (124) and the outer sleeve surface (126), and wherein the thickness (128) is from 0.5 millimetres to 1.5 millimetres.

4. The fuel spray nozzle (200) of claim 3, wherein the sleeve (112) further comprises at least one recess (113) extending from the inner sleeve surface (124) towards the outer sleeve surface (126), wherein the fuel spray nozzle (100) further comprises a sealing member (132) at least partially disposed within the at least one recess (113), and wherein the sealing member (132) engages with the fuel tube (106).

5. The fuel spray nozzle (200) of claim 4, wherein the sealing member (132) comprises an O-ring (134).

6. The fuel spray nozzle (200) of claim 4 or 5, wherein the sealing member (132) comprises a fluoroelastomer polymer.

7. The fuel spray nozzle (100, 200) of any preceding claim, wherein the sleeve (112) comprises: a pair of ends (140) spaced apart from each other with respect to the tube axis (110); and a pair of lips (142) disposed at the pair of ends (140) and engaging with the fuel tube (106), wherein each of the pair of lips (142) is configured to scrape the fuel tube (106).

8. The fuel spray nozzle (100, 200) of any preceding claim, further comprising at least one biasing member (150) connected to the sleeve (112) and engaging with the fuel tube (106), wherein the at least one biasing member (150) is configured to maintain the sleeve (112) in a predefined position with respect to the fuel tube (106).

9. The fuel spray nozzle (100, 200) of any preceding claim, wherein the sleeve (112) has a melting temperature of greater than 160 °C.

10. A gas turbine engine (10) including the fuel spray nozzle (100, 200) of any preceding claim.
